## Europäisches Patentamt
## European Patent Office
## Office européen des brevets

(11) Veröffentlichungsnummer : **0 386 424 B1**

# (12) EUROPÄISCHE PATENTSCHRIFT

(45) Veröffentlichungstag der Patentschrift :
**02.12.92 Patentblatt 92/49**

(21) Anmeldenummer : **90101007.4**

(22) Anmeldetag : **18.01.90**

(51) Int. Cl.⁵ : **F16B 27/00,** F16B 15/08,
// F16B43/00

(54) **Magazin für die Magazinierung von stiftartigen Befestigern.**

(30) Priorität : **10.03.89 AT 558/89**

(43) Veröffentlichungstag der Anmeldung :
**12.09.90 Patentblatt 90/37**

(45) Bekanntmachung des Hinweises auf die
Patenterteilung :
**02.12.92 Patentblatt 92/49**

(84) Benannte Vertragsstaaten :
**AT CH DE ES FR GB IT LI NL SE**

(56) Entgegenhaltungen :
**AT-B- 382 697
DE-A- 2 042 769
DE-A- 3 603 402
US-A- 3 845 860**

(73) Patentinhaber : **EGO KUNSTSTOFFWERK AG
Schöntalstrasse 2
CH-9450 Altstätten/SG (CH)**

(72) Erfinder : **Hasler, Kurt, Dipl.-Ing.
Weiherstrasse 53
CH-8580 Amriswil (CH)**

(74) Vertreter : **Hefel, Herbert, Dipl.-Ing.
Egelseestrasse 65a
A-6800 Feldkirch-Tosters (AT)**

**Beschreibung**

Die Erfindung bezieht sich auf ein Magazin für die Magazinierung von stiftartigen Befestigern mit den Merkmalen des Oberbegriffes des Patentanspruches 1.

Solche Magazine sind in vielen Formen und Ausgestaltungen bekanntgeworden (DGM 76 39 013, 75 21 374, DE-OS 25 41 045, 25 12 825, 25 12 181, 17 03 877, 25 27 140, DE-PS 24 11 119, GB-PS 1 457 494, AT-PS 341 453, CA-PS 1 007 039, EU-PS 14 725, US-PS 2 909 781, 4 162 728, 1 306 107, 3 774 755, 3 438 487, 3 097 360, AT-PS 382 697). Die bekanntgewordenen Magazine lassen sich im wesentlichen in drei Typenformen unterteilen:

a) bandartige Streifen mit darin in periodischen Abständen vorgesehenen Durch-bzw. Einsecköffnungen für die Befestiger, wobei hier die Achse der zueinander parallel liegenden Befestiger im wesentlichen rechtwinkelig stehen zur Ebene des bandartigen Streifens:

b) Streifen, deren Längsränder zahnartig aus- bzw. eingeschnitten sind. Diese randseitigen, zahnartigen ein- bzw. ausgeschnitten Lappen sind paarweise aufgebogen und stehen dann rechtwinkelig zur Ebene des Streifens, wobei je ein oberer und je ein unterer Lappen am Rand des Streifens einen Befestiger zangenartig fassen;

c) Streifen, die mit ihrer Breitseite an den Befestigern anliegen, wobei diese Streifen entweder klammerartige Halter an ihrer Breitseite für die Aufnahme der Befestiger aufweisen, oder aber paarweise vorgesehen sind und mit ihrer Breitseite aneinander anliegen und zwischen sich die Befestiger aufnehmen.

Werden die Befestiger mittels eines dafür vorgesehenen Setzgerätes gesetzt, so werden die Befestiger entweder aus ihrer, durch das Magazin gebildeten Halterung herausgedrückt oder herausgerissen, oder aber, wenn der B-festiger rechtwinkelig zur Ebene des Magazinstreifens steht, wird der Streifen entlang von Sollbruchstellen beim Setzen des Befestigers getrennt und der am Befestiger verbleibende Teil dient dann als Unterlagsscheibe (DE-AS 20 42 769).

Die bandartigen Streifen, die hier verwendet werden und bekannt sind, sind unabhängig von ihrer jeweiligen speziellen Ausbildung relativ steif, so daß sie entweder in schienenartiger Form verwendet werden, was die Magazinierung am Setzgerät mengenmäßig stark beschränkt oder aber, wenn die Streifen aufgewickelt werden, bilden sie aufgrund ihrer Steifigkeit voluminöse Gebilde, die sehr große Magazinierbehälter notwendig machen. Mit anderen Worten: Das spezifische Fassungsvermögen die Magazinbehälters ist in diesem Falle klein.

Im besonderen ist hier auch der bekannte Magazinierstreifen für Schrauben nach der österreichischen Patentschrift 382 697 zu erwähnen. Bei diesem Magazinierstreifen für Schrauben sind diese mit Dichtscheiben bestückt, wobei diese Dichtscheiben an ihren einander zugewandten Rändern über schmale, parallel zur Längsrichtung des Magazinierstreifens verlaufende Stege miteinander verbunden sind. In den Stegen sind darüber hinaus Kerben als Sollbruchstellen vorgesehen. Beim Einschraubvorgang verbleibt der ganze, der jeweiligen Schraube zugeordnete Teil des Magazinierstreifens unterhalb des Schraubenkopfes, wo er als Dichtscheibe die ihm zugedachte Dichtfunktion zu erfüllen hat, oder eventuell als Unterlagsscheibe dienen kann. Aus der diesem Teil des Magazinierstreifens zugeordneten Funktion ergibt sich für den einschlägigen Fachmann zwangslos, daß das Material für diesen Streifen entweder zähelastisch ist, wenn er als Unterlagsscheibe dient, oder elastomere Eigenschaften besitzen muß, wenn es als Dichtscheibe wirksam werden soll. In den Schuß- und Setzapparaten, bei welchen solche Magazinierstreifen eingesetzt werden, wirkt auf das zu setzende Befestigungsglied ein Luftpolster ein und es können hier keine Messer verwendet und vorgesehen werden, schon allein aus konstruktiven Gründen nicht, mit welchen diese aus zähelastischen oder elastomeren Materialen bestehende Stege durchtrennt werden können. Die Einsatzmöglichkeit solcher Magazinierstreifen ist daher beschränkt, abgesehen davon, daß Streifen dieser Art aufgrund der erwähnten Materialen und der Geometrie der hier vorgesehenen Stege nicht raumsparend aufwickelbar sind.

Es ist auch bekannt (US-Patentschrift 3 711 931 und 3 845 860), Muttern zu Magazinierstreifen miteinander zu verbinden, wobei hier als Verbindungselemente Stäbe oder Drähte verwendet werden. Es handelt sich dabei um Stäbe aus geglühten Stähler mit geringem Kohlenstoff, welchen gegenüber Musiksaiten der Vorzug eingeräumt werde. Als weitere geeignete Materialien werden monofile Nylonfäden oder Kabel vorgeschlagen. Das Durchtrennen bzw. Durchschneiden solcher Materialien ist aber ebenso schwierig, wenn nicht noch schwieriger als bei jenem Material, das für die Beilagscheiben oder Dichtscheiben gemäß der AT-PS 382 697 verwendet werden soll. Werden solche Materialien eingesetzt, dann wird der größte Teil der Schlagenergie, die vom Bolzensetzgerät aufgebracht werden kann, dazu verwendet werden müssen, um die Verbindungsmittel zu durchtrennen. Daß dadurch die Effizienz des Setzgerätes erheblich beeinträchtigt wird, bedarf wohl keiner näheren Erörterung. Damit energiemäßig gesehen das Setzgerät ordnungsgemäß seine Funktion erfüllen kann, müßte es deshalb entsprechend schwer und massiv ausgestaltet werden, was aber für ein handgeführtes Gerät nicht zweckmäßig ist. Um diesem Nachteil zu begegnen, schlägt die Erfindung jene Maßnahmen vor, die Inhalt und Gegenstand des kennzeichnenden Teiles des Patentanspruches 1 sind. Die hier vorgesehenen schlagspröden Fasern, vorzugsweise aus Glasfasern oder glasfaserartigen Materialien für die flexiblen Schnüre besitzen eine hohe Biegsamkeit und eine hohe Zugfestigkeit, so daß die Magazinierstreifen eng aufgewickelt werden können und beim betriebsmäßigen Einsatz mit ausreichend hohen und zuverlässigen Kräften abwickelbar und in das Setzgerät einziehbar sind. Sie besitzen ferner eine außerordentlich geringe Kerbschlagfestigkeit, so daß der für das Durchtrennen dieser Verbindungsglieder notwendige Energieaufwand aufgebracht werden kann, ohne daß die für das Setzen des Befestigers zur Verfügung stehende Energie durch diesen Trennvorgang in allzu großem Umfang aufgezehrt wird, wodurch es möglich ist, Setzgeräte mit hoher Effizient herzustellen.

Ausführungsbeispiele der Erfindung werden anhand der Zeichnung näher erläutert. Es zeigen:

Fig. 1 eine Draufsicht auf eine erste Ausführungsform und

Fig. 2 die dazugehörende Seitensicht;

Fig. 3 eine Draufsicht auf eine zweite Ausführungsform und

Fig. 4 die dazugehörende Seitensicht;

Fig. 5 die Draufsicht auf ein weiteres Ausführungsbeispiel.

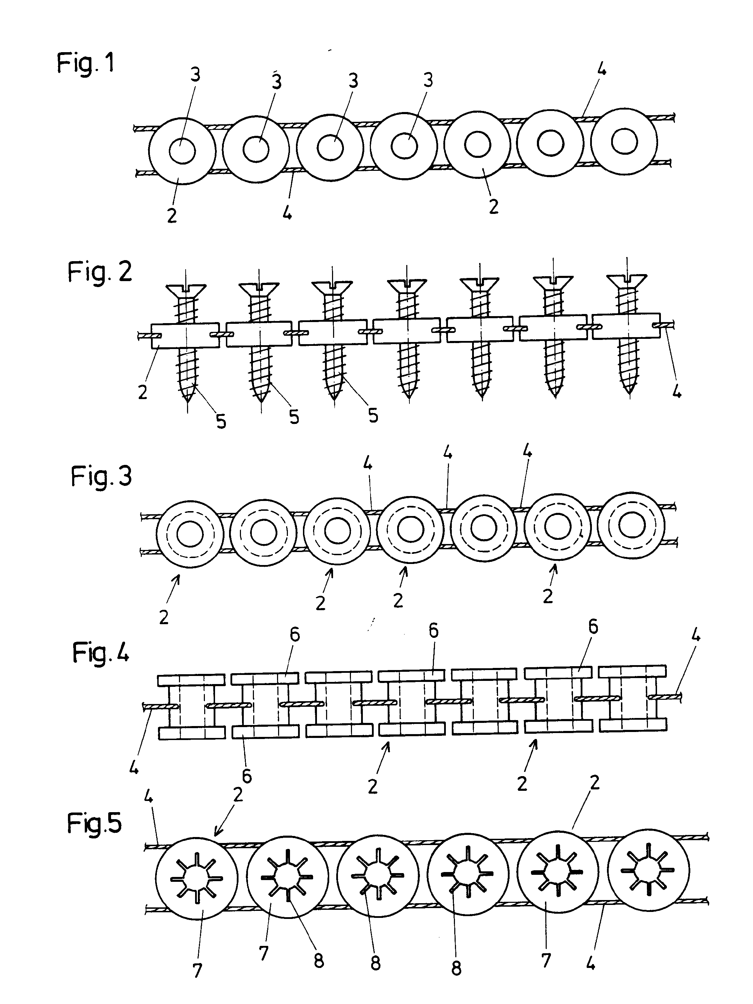

Der das Magazin bildende bandartige Streifen 1 besteht aus einer Vielzahl von in einer Reihe und mit Abstand voneinander angeordneten Streifenabschnitten 2, die als Rundscheibe mit einer zentralen Öffnung 3 ausgebildet sind. Diese Streifenabschnitte 2 sind aus einem geeigneten Kunststoffmaterial gefertigt und die in einer Reihe aufeinanderfolgenden Streifenabschnitte 2 sind hier durch zwei flexible Schnüre untereinander verbunden, wobei die paarweise vorgesehenen Schnüre 4 durch das Kunststoffmaterial der getrennt gefertigten Streifenabschnitte 2 verlaufen, so daß die Öffnung 3 für die Aufnahme des Befestigers zwischen diesen Schnüren liegt. In den so gefertigten, endlosen, bandartigen Streifen 1 werden dann zweckmäßigerweise in einem nachfolgenden Arbeitsverfahren fabrikseitig die Befestiger 5 eingefügt. Ein derart vorbereitetes Magazin ist in Fig. 2 in Seitensicht gezeigt.

Die flexiblen Schnüre, Bänder oder Kordeln 4 bestehen aus einem anderen Material als die Streifenabschnitte 2. Werden die Streifenabschnitte 2 vorzugsweise aus Polyäthylen oder Polyamid gefertigt, so werden die Schnüre, Bänder oder Kordeln 4 aus schlagporösen Fasern, vorzugsweise aus Glasfasern oder glasfaserartigen Materialien gefertigt.

Die flexiblen Schnüre, Bänder oder Kordeln 4 sind polyfil aufgebaut. Dies gewährleistet eine hohe Flexibilität und Verwindbarkeit wie auch eine hohe Zugfestigkeit des Magazinbandes. Auch wird dadurch eine geringe Zugdehnung erreicht. Diese geringe Zugdehnung ist außerordentlich wichtig für den betriebmäßigen Einsatz, damit bei der Verarbeitung die Abstände der einzelnen Befestiger voneinander tatsächlich konstant bleiben.

Diese Streifenabschnitte 2 können, wie in den Fig. 3 und 4 veranschaulicht auch eine hülsen- oder spulenartige Form besitzen. In das Magazin, das in den Fig. 3 und 4 dargestellt ist, sind die Befestiger noch nicht eingefügt. Verlaufen die paarweise angeordneten Schnüre 4 beim gezeigten Ausführungsbeispiel nach den Fig. 3 und 4 im mittleren Bereich der spulenartigen Form, so ist es denkbar und liegt im Rahmen der Erfindung, diese Schnüre 4 durch die endseitig vorgesehenen Bunde 6 laufenzulassen.

Beim Setzen der Befestiger mit einem geeigneten Setzgerät werden die Schnüre 4 durchtrennt und der Streifenabschnitt 2 verbleibt am zu setzenden Befestiger und bildet eine Unterlagsscheibe (Fig. 1 und 2) oder einen zusätzlichen Ankerteil (Fig. 3 und 4), an dem ein weiterer Bauteil angebracht werden kann, oder aber es kann ein solcher spulenartiger Formkörper je nach seiner Ausbildung auch als Deformationsglied wirken, um einen Teil der Stoß- oder Schlagenergie des Bolzensetzgerätes durch seine Verformung aufzunehmen.

Beim Ausführungsbeispiel nach Fig. 5. das im wesentlichen jenem nach den Fig. 1 und 2 entspricht, sind die einzelnen Streifenabschnitte 2 ebenfalls scheibenartig ausgebildet und die zentrale Öffnung 3 durch Ferderlappen 7 begrenzt, die durch radial verlaufende, schlitzartige Aussparungen 8 gebildet sind. Bei dieser Gestaltung der Streifenabschnitte 2 wird der zu setzende Befestiger durch die Öffnung 3 hindurchgedrückt, der bandartige Streifen als solcher erhalten. Sind in den vorstehend erläuterten Ausführungsbeispielen diese Streifenabschnitte 2 mit rundem Querschnitt dargestellt, so sei hier ausdrücklich erwännt, daß diese Querschnittsform für die Erfindung nicht wesentlich ist, auch andere Querschnittsformen könnten hier mit demselben Vorteil eingesetzt werden. Bei der Fertigung dieser bandartigen Streifen werden die einzelnen Streifenabschnitte 2 einzeln gefertigt und dabei gleichzeitig mit den Schnüre 4 verbunden. Diese Streifenabschnitte bestehen aus Kunststoff und werden in einem Spritzgußverfahren ausgeformt. Der durch die beschriebene Gestaltung des Magazins erzielbare Vorteil liegt in der außerordentlichen Beweglichkeit und Biegsamkeit in allen Ebenen und Richtungen des bandartigen Streifens, der hier als Gliederband ausgebildet ist. Da die Schnüre 4 aus schlagspröden Fasern, beispielsweie aus Glasfasern gefertigt sind, werden diese Schnüre 4 beim Setzen des Befestigers durch den auf den Befestiger einwirkenden Schlag durchtrennt, so daß an Sitzgerät keine zusätzliche Schneidvorrichtung oder Trennvorrichtung vorgesehen werden muß. Da der bandartige, als Magazin dienende Streifen aufgrund seiner erfingungsgemäßen Ausgestaltung eine außerordentliche Beweglichkeit nach allen Richtungen besitzt, kann auch die Führung am Setzgerät für die Befestiger sehr einfach konstruktiv ausgestaltet werden, wobei auf einem vorgegebenen Magazinierungsraum eine außerordentliche Vielzahl von Befestigern untergebracht werden kann.

**Patentansprüche**

1. Magazin für die Magazinierung von stiftartigen Befestigern wie Nägel, Bolzen oder Schrauben mit einem bandartigen Streifen, der Öffnungen zum Einstecken der stiftartigen Befestiger aufweist und zwischen den vom Streifen getragenen Befestigern Trennstellen zur Bildung von Streifenabschnitten vorgesehen sind, wobei jedem Streifenabschnitt ein Befestiger zugeordnet ist und die in einer Reihe aufeinanderfolgenden Streifenabschnitte (2) voneinander distanziert sind, dadurch gekennzeichnet daß die einzeln gefertigten, scheiben- oder hülsenartigen Streifenabschnitte (2), die in einer Reihe aufeinander folgen, durch vorzugsweise paarweise angeordnete, flexible Schnüre, Bänder oder Kordeln (4) verbunden sind und daß die flexiblen Schnüre, Bänder oder Kordeln (4) aus schlagspröden Fasern, vorzugweise aus Glasfasern oder glasfaserartigen Materialien gefertigt sind.

**Claims**

1. A magazine for storing pin-shaped fasteners such as nails, bolts or screws with a strap-like strip which has openings for the insertion of the pin-shaped fasteners and between the fasteners carried by the strip there are provided separating points to form strip sections, wherein one fastener is assigned to each strip section and the strip sections (2) which follow one after another in a line are mutually spaced apart, characterised in that the individually manufactured, disc- or sleeve-shaped strip sections (2) which follow one after another in a line are connected by flexible strings, straps or cords (4), preferably arranged in pairs, and in that the flexible strings, straps or cords (4) are made of fibres which are brittle on impact, preferably glass fibres or glass-fibre-type materials.

**Revendications**

1. Magasin pour le magasinage d'éléments de fixation en forme de pointe tels que des clous, des goujons ou des vis, avec une bande longitudinale qui présente des orifices pour insérer des éléments de fixation en forme de pointe et on prévoit des postes de séparation entre les éléments de fixation portés par les bandes pour former des parties de bande, à chaque partie de bande correspond un élément de fixation, et les parties de bande (2) se succèdent à intervalle régulier, caractérisé en ce que les parties de bande (2) réalisées individuellement en forme de disque ou de douille qui se succèdent, sont disposées de préférence par paire et reliées par cordelettes (4), rubans ou fils souples et que les cordelettes, rubans ou fils (4) flexibles sont en fibres cassantes au choc, de préférence en fibre de verre ou en matériau de type fibre de verre.

Fig. 1

Fig. 2

Fig. 3

Fig. 4

Fig. 5